(19) Europäisches Patentamt / European Patent Office / Office européen des brevets

(11) EP 4 424 876 A2

(12) **EUROPEAN PATENT APPLICATION**

(43) Date of publication:
**04.09.2024 Bulletin 2024/36**

(21) Application number: **24153623.4**

(22) Date of filing: **24.01.2024**

(51) International Patent Classification (IPC):
***C25B 1/23*** *(2021.01)* ***C25B 3/07*** *(2021.01)*
***C25B 3/26*** *(2021.01)* ***C25B 9/23*** *(2021.01)*
***C25B 9/73*** *(2021.01)* ***C25B 9/77*** *(2021.01)*
***C25B 15/02*** *(2021.01)* ***C25B 15/023*** *(2021.01)*

(52) Cooperative Patent Classification (CPC):
**C25B 3/26; C25B 1/23; C25B 3/07; C25B 9/23; C25B 9/73; C25B 9/77; C25B 15/02; C25B 15/023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.03.2023 JP 2023032232**
**02.03.2023 JP 2023032245**

(71) Applicants:
- **Kabushiki Kaisha Toshiba**
  **Tokyo 105-0023 (JP)**
- **Toshiba Energy Systems & Solutions Corporation**
  **Saiwai-ku**
  **Kawasaki-shi**
  **Kanagawa (JP)**

(72) Inventors:
- **SHIINO, Keisuke**
  **Kawasaki-shi, Kanagawa (JP)**
- **SHIMOTORI, Soichiro**
  **Kawasaki-shi, Kanagawa (JP)**
- **MIZUGUCHI, Koji**
  **Kawasaki-shi, Kanagawa (JP)**

(74) Representative: **Hoffmann Eitle**
**Patent- und Rechtsanwälte PartmbB**
**Arabellastraße 30**
**81925 München (DE)**

(54) **CELL DEGRADATION LEVEL CALCULATION DEVICE FOR ELECTROCHEMICAL CELL STACK, CELL DEGRADATION LEVEL CALCULATION SYSTEM, CELL DEGRADATION LEVEL CALCULATION METHOD, AND CELL DEGRADATION LEVEL CALCULATION PROGRAM**

(57) A cell degradation level calculation device for electrochemical cell stack according to an embodiment includes: a first calculation unit that calculates a first target voltage value based on first characteristics data; a second calculation unit that calculates a second target voltage value based on second characteristics data; and a third calculation unit that calculates a cell degradation level showing a degradation level of a cell based on the first target voltage value and the second target voltage value. The first target voltage value is the voltage value at which a voltage-value decrease rate reaches a first threshold value in a second time slot of the first characteristics data. The second target voltage value is the voltage value at which the voltage-value decrease rate reaches a second threshold value in a fourth time slot of the second characteristics data.

40
CELL DEGRADATION LEVEL CALCULATION DEVICE
50
51
INPUT UNIT
MEMORY UNIT
53
52
DISPLAY UNIT
COMMUNICATION UNIT
54
FIRST COMPUTATION UNIT
60
61
FIRST ACQUISITION UNIT
THIRD CALCULATION UNIT
65
62
SECOND ACQUISITION UNIT
FIRST DETERMINATION UNIT
66
63
FIRST CALCULATION UNIT
FIRST DISPLAY INFORMATION CREATION UNIT
67
64
SECOND CALCULATION UNIT
N
41
FIRST DATABASE
SECOND DATABASE
42
FIG. 4

EP 4 424 876 A2

## Description

### FIELD

Embodiments relate to a cell degradation level calculation device for electrochemical cell stack, a cell degradation level calculation system, a cell degradation level calculation method, and a cell degradation level calculation program.

### BACKGROUND

An electrochemical cell stack, which constitutes a fuel cell, a water electrolyzer, a carbon dioxide electrolyzer, etc., is made by stacking a plurality of cells. A membrane electrode assembly constituting a cell includes an anode electrode, a cathode electrode, and an electrolyte membrane interposed between the anode electrode and the cathode electrode. Continuous use of the electrochemical cell stack causes degradation of a catalytic material contained in the anode electrode and the cathode electrode, and degradation of the electrolyte membrane. This may impair performance of the electrochemical cell stack.

### BRIEF DESCRIPTION OF THE DRAWINGS

Fig. 1 is a cross-sectional view showing a schematic structure of an electrochemical cell stack according to a first embodiment.
Fig. 2 is a top view showing a cell shown in Fig. 1.
Fig. 3 is a view showing a schematic structure of a system of the electrochemical cell stack shown in Fig. 1.
Fig. 4 is a view showing a cell degradation level calculation system for electrochemical cell stack according to a first embodiment.
Fig. 5 is a schematic view for explaining first characteristics data stored in a first database shown in Fig. 4.
Fig. 6 is a schematic view for explaining second characteristics data stored in a second database shown in Fig. 4.
Fig. 7 is a graph showing voltage-time characteristics of a cell.
Fig. 8 is a view for explaining a measurement method for obtaining the characteristics data shown in Figs. 5 and 6.
Fig. 9 is a flowchart showing a cell degradation level calculation method for electrochemical cell stack according to the first embodiment.
Fig. 10 is a view showing a cell degradation level calculation system for electrochemical cell stack according to a second embodiment.
Fig. 11 is a schematic view for explaining first chrematistics data stored in a first database shown in Fig. 10.
Fig. 12 is a schematic view for explaining second characteristics data stored in a second database shown in Fig. 10.
Fig. 13 is a graph showing voltage-current characteristics of a cell.
Fig. 14 is a view for explaining a measurement method for obtaining the characteristics data shown in Figs. 11 and 12.
Fig. 15 is a flowchart showing a cell degradation level calculation method for electrochemical cell stack according to the second embodiment.

### DETAILED DESCRIPTION

A cell degradation level calculation device for electrochemical cell stack according to an embodiment is a device that calculates a degradation level of a cell of an electrochemical cell stack. The cell degradation level calculation device for electrochemical cell stack comprises: a first acquisition unit that acquires a piece of first characteristics data showing voltage-time characteristics of the cell after stoppage of carbon dioxide electrolysis; a second acquisition unit that acquires a piece of second characteristics data showing voltage-time characteristics of the cell after stoppage of water electrolysis; a first calculation unit that calculates a first target voltage value based on the first characteristics data; a second calculation unit that calculates a second target voltage value based on the second characteristics data; and a third calculation unit that calculates a cell degradation level showing a degradation level of the cell based on the first target voltage value and the second target voltage value. The voltage-time characteristics after stoppage of the carbon dioxide electrolysis has a first time slot in which a voltage-value decrease rate increases, and a second time slot succeeding the first time slot, in which the voltage-value decrease rate decreases. The voltage-time characteristics after stoppage of the water electrolysis has a third time slot in which a voltage-value decrease rate increases, and a fourth time slot succeeding the third time slot, in which the voltage-value decrease rate decreases. The first target voltage value is the voltage value at which the voltage-value decrease rate reaches a first threshold value in the second time slot of the first characteristics data. The second target voltage value is the voltage value at which the voltage-value decrease rate reaches a second threshold value in the fourth time slot of the second characteristics data.

A cell degradation level calculation system for electrochemical cell stack according to an embodiment is a system that calculates a degradation level of a cell of an electrochemical cell stack. The cell degradation level calculation system for electrochemical cell stack comprises: the aforementioned cell degradation level calculation device for electrochemical cell stack; a first database that stores the first characteristics data; and a second database that stores the second characteristics data.

The first acquisition unit acquires the first characteristics data from the first database. The second acquisition unit acquires the second characteristics data from the second database.

A cell degradation level calculation method for electrochemical cell stack according to an embodiment is a method that calculates a degradation level of a cell of an electrochemical cell stack. The cell degradation level calculation method for electrochemical cell stack comprises: acquiring a piece of first characteristics data showing voltage-time characteristics of the cell after stoppage of carbon dioxide electrolysis in the electrochemical cell stack; acquiring a piece of second characteristics data showing voltage-time characteristics of the cell after stoppage of water electrolysis in the electrochemical cell stack; calculating a first target voltage value based on the first characteristics data; calculating a second target voltage value based on the second characteristics data; and calculating a cell degradation level showing a degradation level of the cell based on the first target voltage value and the second target voltage value. The voltage-time characteristics after stoppage of the carbon dioxide electrolysis has a first time slot in which a voltage-value decrease rate increases, and a second time slot succeeding the first time slot, in which the voltage-value decrease rate decreases. The voltage-time characteristics after stoppage of the water electrolysis has a third time slot in which a voltage-value decrease rate increases, and a fourth time slot succeeding the third time slot, in which the voltage-value decrease rate decreases. The first target voltage value is the voltage value at which the voltage-value decrease rate reaches a first threshold value in the second time slot of the first characteristics data. The second target voltage value is the voltage value at which the voltage-value decrease rate reaches a second threshold value in the fourth time slot of the second characteristics data.

A cell degradation level calculation program for electrochemical cell according to an embodiment is a program that causes a computer to execute a cell degradation level calculation method for electrochemical cell stack that calculates a degradation level of a cell of an electrochemical cell stack. The cell degradation level calculation method comprises: acquiring a piece of first characteristics data showing voltage-time characteristics of the cell after stoppage of carbon dioxide electrolysis in the electrochemical cell stack; acquiring a piece of second characteristics data showing voltage-time characteristics of the cell after stoppage of water electrolysis in the electrochemical cell stack; calculating a first target voltage value based on the first characteristics data; calculating a second target voltage value based on the second characteristics data; and calculating a cell degradation level showing a degradation level of the cell based on the first target voltage value and the second target voltage value. The voltage-time characteristics after stoppage of the carbon dioxide electrolysis has a first time slot in which a voltage-value decrease rate increases, and a second time slot succeeding the first time slot, in which the voltage-value decrease rate decreases. The voltage-time characteristics after stoppage of the water electrolysis has a third time slot in which a voltage-value decrease rate increases, and a fourth time slot succeeding the third time slot, in which the voltage-value decrease rate decreases. The first target voltage value is the voltage value at which the voltage-value decrease rate reaches a first threshold value in the second time slot of the first characteristics data. The second target voltage value is the voltage value at which the voltage-value decrease rate reaches a second threshold value in the fourth time slot of the second characteristics data.

A cell degradation level calculation device for electrochemical cell stack according to an embodiment is a device that calculates a degradation level of a cell of an electrochemical cell stack. The cell degradation level calculation device for electrochemical cell stack comprises: a third acquisition unit that acquires a piece of third characteristics data showing voltage-current characteristics of the cell; a fourth acquisition unit that acquires a piece of fourth characteristics data showing voltage-current characteristics of the cell when it is new; a fourth calculation unit that calculates a third target voltage value showing a voltage value corresponding to a reference current value based on the third characteristics data; a fifth calculation unit that calculates a fourth target voltage value showing a voltage value corresponding to the reference current value based on the fourth characteristics data; and a sixth calculation unit that calculates a cell degradation level showing a degradation level of the cell based on the third target voltage value and the fourth target voltage value.

A cell degradation level calculation system for electrochemical cell stack according to an embodiment is a system that calculates a degradation level of a cell of an electrochemical cell stack. The cell degradation level calculation system for electrochemical cell stack comprises: the aforementioned electrochemical cell; a third database that stores the third characteristics data; and a fourth database that stores the fourth characteristics data. The third acquisition unit acquires the third characteristics data from the third database. The fourth acquisition unit acquires the fourth characteristics data from the fourth database.

A cell degradation level calculation method for electrochemical cell stack according to an embodiment is a method that calculates a degradation level of a cell of an electrochemical cell stack. The cell degradation level calculation method for electrochemical cell stack comprises: acquiring a piece of third characteristics data showing voltage-time characteristics of the cell; acquiring a piece of fourth characteristics data showing voltage-time characteristics of the cell when it is new; calculating a third target voltage value showing a voltage value corresponding to a reference current value based on the third characteristics data; calculating a fourth target voltage value showing a voltage value corresponding to the reference current value based on the fourth characteristics data; and calculating a cell degradation level showing a degradation level of the cell based on the third target voltage value and the fourth target voltage value.

A cell degradation level calculation program for electrochemical cell according to an embodiment is a program that causes a computer to execute a cell degradation level calculation method for electrochemical cell stack that calculates a degradation level of a cell of an electrochemical cell stack. The cell degradation level calculation method comprises: acquiring a piece of third characteristics data showing voltage-time characteristics of the cell; acquiring a piece of fourth characteristics data showing voltage-time characteristics of the cell when it is new; calculating a third target voltage value showing a voltage value corresponding to a reference current value based on the third characteristics data; calculating a fourth target voltage value showing a voltage value corresponding to the reference current value based on the fourth characteristics data; and calculating a cell degradation level showing a degradation level of the cell based on the third target voltage value and the fourth target voltage value.

(First Embodiment)

Next, a cell degradation level calculation device for electrochemical cell stack according to an embodiment, a cell degradation level calculation system, a cell degradation level calculation method, and a cell degradation level calculation program are described. An electrochemical cell stack according to an embodiment is first described. An electrochemical cell stack is used in an electrolysis device for carbon dioxide, water, etc., or in a fuel cell.

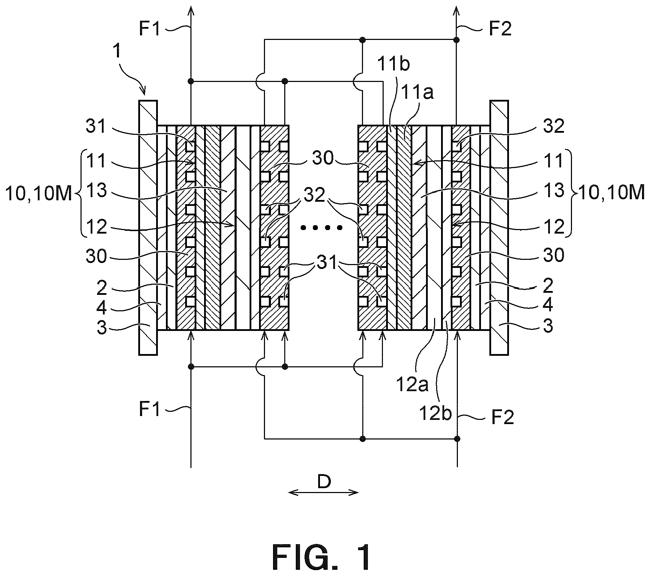

As shown in Fig. 1, an electrochemical cell stack 1 comprises a pair of current collector plates 2, a plurality of cells 10 stacked between the pair of current collector plates 2, and a plurality of separators 30 alternately stacked with the cells 10. Each cell 10 includes a membrane electrode assembly (MEA) 10M and a cell frame 20. The cells 10, the separators 30 and the current collector plates 2 are fastened and pressed by a pair of fastening plates 3. The pair of fastening plates 3 are fastened by using a bolt, a nut, etc., not shown. An insulating plate 4 is interposed between the fastening plate 3 and the current collector plate 2.

The membrane electrode assembly 10M includes a cathode electrode 11, an anode electrode 12, and an electrolyte membrane 13 interposed between the cathode electrode 11 and the anode electrode 12. The membrane electrode assembly 10M is in the form of a thin plate. The membrane electrode assembly 10M may be formed to have a rectangular shape when viewed in a stacking direction D of the electrochemical cell stack 1.

The cathode electrode 11 includes a cathode catalyst layer 11a and a cathode-gas diffusion layer 11b. The cathode catalyst layer 11a is in contact with the electrolyte membrane 13. The cathode-gas diffusion layer 11 b is in contact with the separator 30, and diffuses a cathode fluid supplied from a cathode flow path described later. When the electrochemical cell stack 1 is used in an electrolysis device, the cathode-gas diffusion layer 11b may be formed of, e.g., carbon paper or titanium nonwoven fabric. The cathode-gas diffusion layer 11b is joined to the cathode catalyst layer 11a. The cathode-gas diffusion layer 11b may be omitted, as long as the cathode catalyst layer 11a can diffuse the cathode fluid.

The anode electrode 12 includes an anode catalyst layer 12a and an anode-gas diffusion layer 12b. The anode catalyst layer 12a is in contact with the electrolyte membrane 13. The anode-gas diffusion layer 12b is in contact with the separator 30, and diffuses an anode fluid supplied from an anode flow path 32 described later. When the electrochemical cell stack 1 is used in an electrolysis device, the anode-gas diffusion layer 12b may be formed of, e.g., carbon paper or titanium nonwoven fabric. The anode-gas diffusion layer 12b is joined to the anode catalyst layer 12a. The anode-gas diffusion layer 12b may be omitted, as long as the anode catalyst layer 12a can diffuse the anode fluid.

The electrolyte membrane 13 is formed of an electrolyte material. When the electrochemical cell stack 1 is used in an electrolysis device, the electrolyte membrane 13 may be an ion exchange membrane, a porous membrane, etc., for example, but any membrane can be used.

The anode electrode 12 is formed on one surface of the electrolyte membrane 13, and the cathode electrode 11 is formed on the other surface of the electrolyte membrane 13. The anode electrode 12 and the cathode electrode 11 are joined to the electrolyte membrane 13.

When the electrochemical cell stack 1 is used as a fuel cell, a power generation reaction is performed for generating electric energy. In this case, the cathode electrode 11 is supplied with the cathode fluid (see symbol F1 in Fig. 1) from the cathode flow path 31 described later. The cathode fluid is a gas containing oxygen, and may be air, for example. The anode electrode 12 is supplied with the anode fluid (see symbol F2 in Fig. 1) from the anode flow path 32 described later. The anode fluid may be a gas containing hydrogen, for example. The supply of the cathode fluid and the anode fluid causes an electrochemical reaction in the membrane electrode assembly 10M. As a result, electric energy can be taken out.

When the electrochemical cell stack 1 is used as an electrolysis device, an electrolysis reaction is performed using electric energy. In this case, the cathode fluid may be water vapor or carbon dioxide gas, and the water vapor or carbon dioxide gas may be electrolyzed in the cathode electrode. The anode electrode 12 may be supplied with an electrolytic solution. The electrolytic solution may be an aqueous solution containing an electrolyte such as calcium hydrogen carbonate ($KHCO_3$).

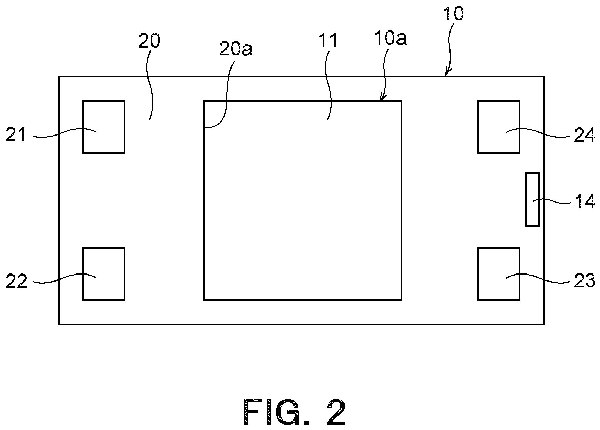

As shown in Fig. 2, an identification mark 14 showing identification information is attached to a cell 10. The identification information may be an ID code. The identification mark 14 is attached to a surface of the cathode electrode 11, which opposes the cathode flow path 31, or a surface of the anode electrode 12, which opposes the anode flow path 32. The identification mark 14 may be attached to a marginal portion. The marginal portion is located outside a seal portion (not shown) of the cell frame 20 described later. The identification mark 14 may be provided on the cell frame 20 by, for example, printing, laser, handwriting, etc. The identification mark 14 may be provided on the cell frame 20 in alphanumeric characters, or may be provided on the cell frame 20 in a one-dimensional bar code or two-dimensional bar code.

As shown in Fig. 2, when viewed in the stacking direction D of the electrochemical cell stack 1, the membrane electrode assembly 10M is surrounded by the cell frame 20. The cell frame 20 may be formed of a plastic film. Plastic film materials to be used may include, for example, polyethylene, polypropylene, polyethylene terephthalate, polystyrene, polycarbonate, polyurethane, phenolic resin, polyimide, polyamide, melamine resin, polyethylene naphthalate, polyacetal, ABS resin, polyether ethyl ketone, polyphenylene ether, polyvinyl acetate, fluorine resin, etc. The cell frame 20 is impermeable to the anode fluid and the cathode fluid.

The cell frame 20 includes an opening 20a. The membrane electrode assembly 10M is inserted in the opening 20a and adhered thereto by an adhesive. Adhesives to be used may include acrylic, epoxy, polyethylene, polypropylene, polyester, polyolefin, urethane, polyvinyl acetate, etc.

The cell frame 20 is provided with a cathode fluid supply port 21, an anode fluid supply port 22, a cathode fluid discharge port 23, and an anode fluid discharge port 24. Namely, the electrochemical cell stack 1 according to this embodiment has an internal manifold structure. The respective fluid supply ports 21, 22 and the respective fluid discharge ports 23, 24 pass through the cell frame 20. The respective fluid supply ports 21, 22 are located on one side of the membrane electrode assembly 10M, and the respective fluid discharge ports 23, 24 are located on the other side of the membrane electrode assembly 10M.

The separator 30 is electrically conductive and gas impermeable. The separator 30 separates an anode fluid atmosphere and a cathode fluid atmosphere.

As shown in Fig. 1, the separator 30 includes a plurality of the cathode flow paths 31 and a plurality of the anode flow paths 32. Each cathode flow path 31 is formed in a side surface of the separator 30, which is on the side of the cathode electrode 11, so that the cathode fluid flowing through the cathode flow path 31 is supplied to the cathode electrode 11. The cathode flow path 31 may have any of a linear flow path structure, a serpentine flow path structure, and a cranked flow path structure. Each anode flow path 32 is formed in a side surface of the separator 30, which is on the side of the anode electrode 12, so that the anode fluid flowing through the anode flow path 32 is supplied to the anode electrode 12 . The anode flow path 32 may have any of a liner flow path structure, a serpentine flow path structure, and a cranked flow path structure.

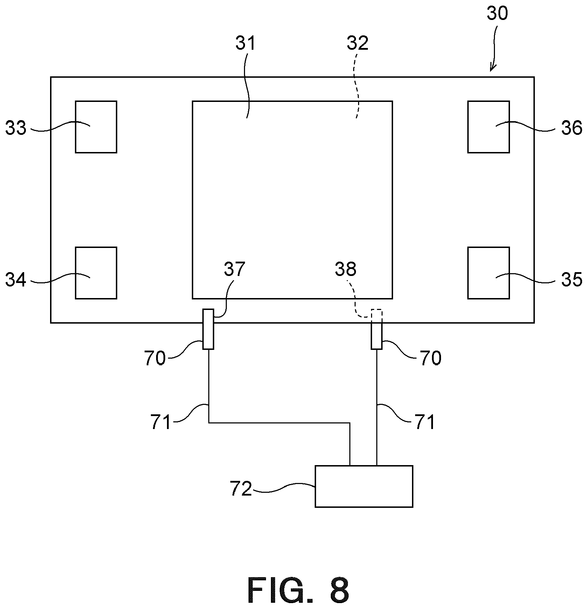

Similarly to the aforementioned cell frame 20, the separator 30 is formed with a cathode fluid supply port 33 (see Fig. 8), an anode fluid supply port 34, a cathode fluid discharge port 35, and an anode fluid discharge port 36. The cathode fluid flows from the cathode fluid supply port 33 to the cathode fluid discharge port 35 through the cathode fluid path 31. The anode fluid flows from the anode fluid supply port 34 to the anode fluid discharge port 36 through the anode fluid path 32. The separator 30 may be formed by any of pressing of a thin metal film and injection molding of a carbon material.

The separator 30 is not joined to the cell 10. As shown in Fig. 1, the separator 30 is pressed against the cell 10 by a pressing force caused by the aforementioned fastening plates 3.

The electrochemical cell stack 1 as structured above can be disassembled after operation. More specifically, the bolt and the nut fastening the fastening plates 3 are detached. Then, the fastening plate 3, the insulation plate 4 and the current collector plate 2, which are positioned at an uppermost position of the electrochemical cell stack 1, are detached. Then, the separators 30 and the cells 10 are sequentially detached, and the respective cells 10 are separated. In this manner, the cell 10 comprising the membrane electrode assembly 10M can be taken out.

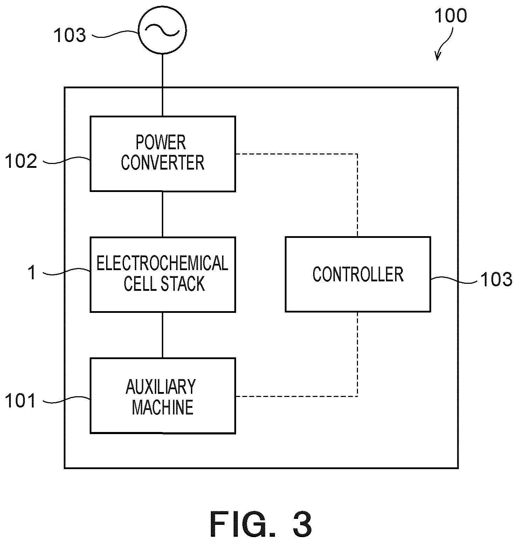

Fig. 3 shows an example of an electrochemical cell stack system 100 comprising the aforementioned electrochemical cell stack 1. The electrochemical cell stack system 100 shown in Fig. 3 may comprise the electrochemical cell stack 1, an auxiliary machine 101, a power converter 102, and a controller 103.

The electrochemical cell stack 1 can be activated and operated by the auxiliary machine 101. When the electrochemical cell stack 1 is used as a fuel cell, the auxiliary machine 101 supplies hydrogen gas and air to the fuel cell. The auxiliary machine 101 is constituted by, for example, a blower. During the operation of the fuel cell, the auxiliary machine 101 is supplied with operating power from a commercial system. Power generated by the fuel cell is converted from a DC current to an AC current by the power converter 102, and is supplied to an external load. When the electrochemical cell stack 1 is used as an electrolysis device, the auxiliary machine 101 supplies, to the electrolysis device, water vapor or carbon dioxide gas, as well as supplies an electrolytic solution. Power used for electrolysis is supplied from a commercial system through the power converter 102. The power converter 102 converts the power from the commercial system, which is an AC current, to a DC current, and supplies it to the electrolysis device. The auxiliary machine 101 and the power converter 102 are controlled by the controller 103.

Next, a cell degradation level calculation system 40 for the electrochemical cell stack 1 according to this embodiment is described. The cell degradation level calculation system 40 is a system for calculating a cell degradation level of the cell 10 of the electrochemical cell stack 1.

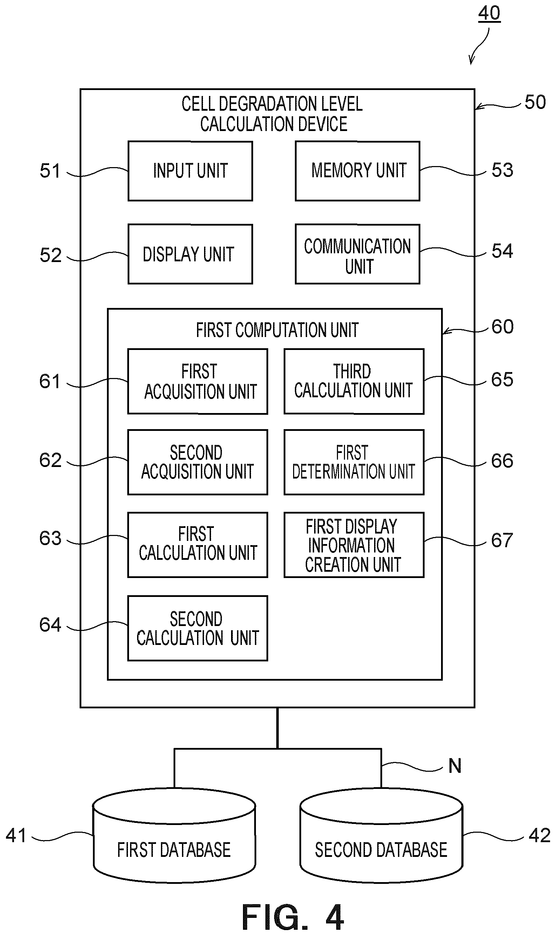

As shown in Fig. 4, the cell degradation level calculation system 40 for the electrochemical cell stack 1 according to this embodiment may comprise a first database 41, a second database 42, and a cell degradation level calculation device 50. The respective databases 41, 42 and the cell degradation level calculation device 50 are connected through a network N such as LAN (Local Area Network). In this embodiment, the first database 41 and the second database 42 are connected to the cell degradation level calculation device 50.

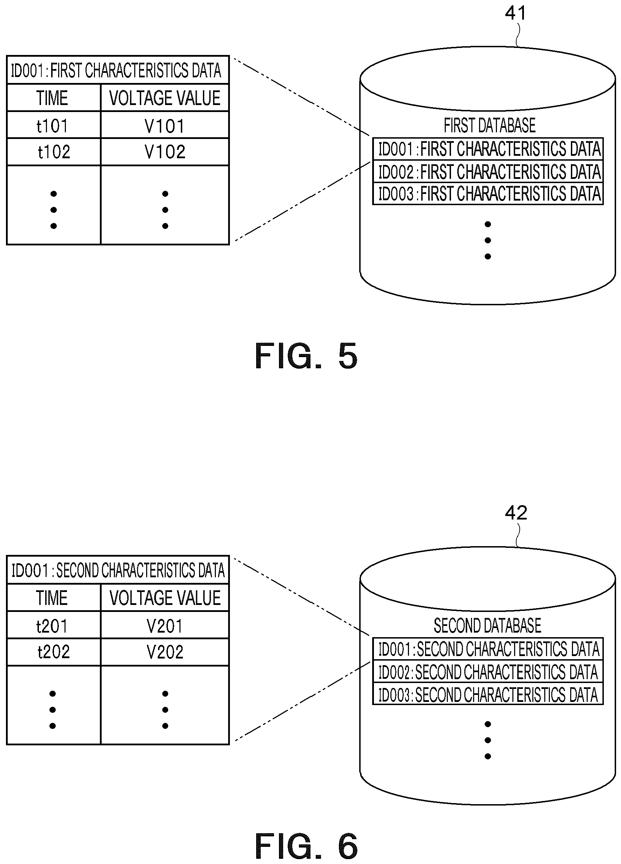

As shown in Fig. 5, the first database 41 stores first characteristics data showing voltage-time characteristics of a certain cell 10 after stoppage of carbon dioxide electrolysis. The first database 41 may store a plurality of pieces of first characteristics data for a plurality of cells 10. Identification information is assigned to each piece of first characteristics data, and each piece of first characteristics data is associated with the identification information. Each piece of first characteristics data has a plurality of combinations of time of day and voltage value corresponding to each other. Details of the first characteristics data will be described later. As shown in Fig. 5, when the identification information is an ID code, consecutive ID codes may be assigned to the respective cells 10. However, numbering of ID codes to be assigned to the respective cells 10 is optional, as long as it has an identification function. The first database 41 may be recorded on a cloud server. Upon measurement, the first characteristics data may be recorded on the cloud server so as to be stored in the first database 41.

As shown in Fig. 6, the second database 42 stores second characteristics data showing voltage-time characteristics of a certain cell 10 after stoppage of water electrolysis. The second database 42 may store a plurality of pieces of second characteristics data for a plurality of cells 10. Identification information is assigned to each piece of second characteristics data, and each piece of second characteristics data is associated with the identification information. Each piece of second characteristics data has a plurality of combinations of time of day and voltage value corresponding to each other. Details of the second characteristics data will be described later. The second database 42 may be recorded on the cloud server. Upon measurement, the second characteristics data may be recorded on the cloud server so as to be stored in the second database 42.

Next, the cell degradation level calculation device 50 according to this embodiment is described. The cell degradation level calculation device 50 is a device for calculating a cell degradation level of the cell 10 of the electrochemical cell stack 1.

As shown in Fig. 4, the cell degradation level calculation device 50 may include an input unit 51, a display unit 52, a memory unit 53, a communication unit 54, and a first computation unit 60. The input unit 51 is configured to input information, and may be constituted by, for example, a keyboard, a mouse, a touch panel, etc. The display unit 52 is configured to display information, and may be constituted by, for example, a display panel, etc. The display unit 52 may display display information created by a first display information creation unit 67 described later. The memory unit 53 is configured to store information, and may be constituted by, for example, a memory or a storage, etc. The communication unit 54 is configured to communicate with an external device storing the databases 41, 42 through the network N. For example, the communication unit 54 may be constituted by, for example, a communication interface, etc.

As shown in Fig. 4, the first computation unit 60 may include functional blocks such as a first acquisition unit 61, a second acquisition unit 62, a first calculation unit 63, a second calculation unit 64, a third calculation unit 65, a first determination unit 66 and the first display information creation unit 67, etc. These functional blocks may be realized by, for example, executing a computer program stored in the memory unit 53 by the first computation unit 60. This program is an example of a cell degradation level calculation program of the electrochemical cell stack 1, and may be installed in the cell degradation level calculation device 50 from a storage medium. Alternatively, the cell degradation level calculation program may be downloaded to the cell degradation level calculation device 50 from a server or the like on the network N.

The first acquisition unit 61 acquires a piece of first characteristics data showing the voltage-time characteristics of the cell 10 after stoppage of the carbon dioxide electrolysis. The first characteristics data is acquired, together with identification information associated therewith, from the aforementioned first database 41. The first acquisition unit 61 is configured to acquire the first characteristics data from the first database 41 through the communication unit 54 and the network N.

The second acquisition unit 62 acquires a piece of second characteristics data showing the voltage-time characteristics of the cell 10 after stoppage of the water electrolysis. The second characteristics data is acquired, together with the identification information associated therewith, from the aforementioned second database 42. The second acquisition unit 62 is configured to acquire the second characteristics data from the second database 42 through the communion unit 54 and the network N.

The first calculation unit 63 calculates a first target voltage value. The first target voltage value $V_1$ is calculated based on the first characteristics data.

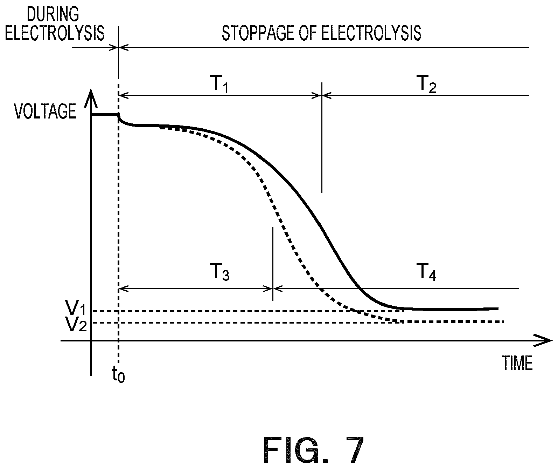

As shown by a solid line in Fig. 7 the first characteristics data may be data showing voltage-time characteristics of a carbon dioxide electrolysis device comprising the electrochemical cell stack 1, which is obtained after carbon dioxide electrolysis has been performed and stopped. In Fig. 7, the carbon dioxide electrolysis has been performed until a time of day $t_0$, and the carbon dioxide electrolysis is stopped at the time of day $t_0$. After the time of day $t_0$, the carbon dioxide electrolysis remains stopped, and the voltage value of the cell 10 decreases.

As shown by the solid line in Fig. 7, the voltage-time characteristics after stoppage of the carbon dioxide electrolysis has a first time slot $T_1$ in which a voltage-value decrease rate increases, and a second time slot $T_2$ succeeding the first time slot, in which the voltage-value decrease rate decreases. The first target voltage value is the voltage value at which the voltage-value decrease rate reaches a first threshold value in the second time slot $T_2$ of the first characteristics data . In the second time slot, the voltage-value decrease rate gradually decreases, and then becomes substantially constant. The first threshold value may be set as a voltage-value decrease rate which may be considered as a constant voltage value. The first calculation unit 63 may calculate a first characteristics curve shown in Fig. 7 with the plurality of combinations of time of day and voltage value constituting the first characteristics data , and may use, as the first target voltage value, a voltage value at which the voltage-value decrease rate reaches the first threshold value in this first characteristics curve. An example of the first characteristics curve is shown as the solid line in Fig. 7.

The second calculation unit 64 calculates a second target voltage value. The second target voltage value $V_2$ is calculated based on the second characteristics data.

As shown by broken lines in Fig. 7, the second characteristics data may be a data showing voltage-time characteristics of a carbon dioxide electrolysis device comprising the electrochemical cell stack 1, which is obtained after water electrolysis has been performed and stopped. In Fig. 7, the water electrolysis has been performed until the time of day $t_0$, and the water electrolysis is stopped at the time of day $t_0$. After the time of day $t_0$, the water electrolysis remains stopped, and the voltage value of the cell 10 decreases.

As shown by the broken lines in Fig. 7, the voltage-time characteristics after stoppage of the water electrolysis has a third time slot $T_3$ in which a voltage-value decrease rate increases, and a fourth time slot $T_4$ succeeding the third time slot, in which the voltage-value decrease rate decreases. The second target voltage value is the voltage value at which the voltage-value decrease rate reaches a second threshold value in the fourth time slot $T_4$ of the second characteristics data. In the fourth time slot, the voltage-value decrease rate gradually decreases, and then becomes substantially constant. The second threshold value may be set as a voltage-value decrease rate which may be considered as a constant voltage value. The second calculation unit 64 may calculate a second characteristics curve shown in Fig. 7 with the plurality of combinations of time of day and voltage value constituting the second characteristics data, and may use, as the second target voltage value, a voltage value at which the voltage-value decrease rate reaches the second threshold value in this second characteristics curve. An example of the second characteristics curve is shown as the broken lines in Fig. 7.

The third calculation unit 65 calculates a cell degradation level based on the first target voltage value and the second target voltage value. The cell degradation level shows a degradation level of a certain cell 10. For example, the second calculation unit 64 may calculate the cell degradation level by dividing a difference, which is obtained by subtracting the second target voltage value from the first target voltage value, by the first target voltage value. Namely, the cell degradation level $\alpha$ may be calculated according to the following formula (1),

$$\alpha = \frac{(V_1 - V_2)}{V_1} \cdots (1)$$

wherein $V_1$ represents the first target voltage value, and $V_2$ represents the second target voltage value.

The first determination unit 66 may determine whether the cell degradation level calculated by the third calculation unit 65 is equal to or greater than a degradation level threshold value. In this case, the degradation degree of the cell 10 can be determined. The degradation level threshold value may be a value at which degradation is considered to be relatively serious. When the cell degradation level is relatively serious, the cell degradation level is high. Alternatively, the degradation level threshold value may be a value at which a short circuit is considered to have occurred in the cell 10. When a short circuit has occurred, a difference between the first target voltage value $V_1$ and the second target voltage value $V_2$ increases, so that the cell degradation level becomes high.

The first display information creation unit 67 crates display information including the cell degradation level calculated by the third calculation unit 65. The display information may include the result of the cell degradation level determined by the first determination unit 66. The display information created by the first display information creation unit 67 may be displayed on the aforementioned display unit 52.

Next, how to create the first characteristics data and the second characteristics data is described. Herein, a case in which the electrochemical cell stack 1 shown in Fig. 1 constitutes a carbon dioxide electrolysis device is described by way of example.

As shown in Fig. 8, a plurality of measurement pins 70 are attached to the electrochemical cell stack 1 to measure a voltage applied to the cell 10. The measurement pin 70 for the cathode electrode 11 may be inserted in a cathode-side recess 37 formed in a surface of the separator 30, which opposes the cathode 11. The cathode-side recess 37 is formed at a position different from the cathode flow path 31 formed in the surface in Fig. 8. In Fig. 8, the cathode flow path 31 is shown simplified for the sake of convenience. The measurement pin 70 inserted in the cathode-side recess 37 can be electrically in contact with the cathode electrode 11. The measurement pin 70 for the anode electrode 12 may be inserted in an anode-side recess 38 formed in a surface of the separator 30, which opposes the anode 12. The anode-side recess 38 is formed at a position different from the anode flow path 32 formed in the rear surface in Fig. 8. The measurement pin 70 inserted in the anode-side recess 38 can be electrically in contact with the anode electrode 12. Although Fig. 8 shows a measurement state of one cell 10 as a typical example, the measurement pins 70 are inserted in the cathode-side recesses 37 and the anode-side recesses 38 of the respective separators 30 to measure voltage values of the respective cells 10 constituting the electrochemical cell stack 1. Namely, two measurement pins 70 may be used for each cell 10 for measurement.

Each measurement pin 70 for the cathode electrode 11 and each measurement pin 70 for the anode electrode 12 are connected through electric wires 71. The electric wires 71 electrically connect the measurement pins 70 and the measurement device 72. When the electrochemical cell stack 1 has an internal manifold structure, the measurement pins 70 are air-tightly attached to the separator 30 using a seal member, not shown. This prevents leakage of fluids such as the cathode fluid, anode fluid, etc. Each electric wire 71 passes through a housing, not shown, to be connected to the measurement device 72 disposed outside.

The measurement device 72 measures a voltage value of each cell 10. The measurement device 72 is connected to the aforementioned first database 41 and the second database 42 through the network N. The voltage value measured by the measurement device 72 and its measurement time of day are associated with the identification information of the corresponding cell 10, and are transmitted to the first database 41. As shown in Fig. 5, the voltage value and the time of day are stored as the first characteristics data in the first database 41. A plurality of pieces of first characteristics data corresponding to the respective cells 10 are stored in the first database 41. Each piece of first characteristics data is associated with the identification information of the corresponding cell 10.

The first characteristics data may be a data showing the voltage-time characteristics of a certain cell 10 in a carbon dioxide electrolysis device comprising the electrochemical cell stack 1, after stoppage of carbon dioxide electrolysis. During the carbon dioxide electrolysis, carbon dioxide gas as the cathode fluid F1 shown in Fig. 1 is supplied to the cathode electrode 11, and an electrolytic solution (such as calcium hydrogen carbonate) as the anode fluid F2 is supplied to the anode electrode 12. The membrane electrode assembly 10M performs the carbon dioxide electrolysis, so that the cathode electrode 11 produces carbon monoxide, which is then discharged from the cathode electrode 11. The anode electrode 12 produces oxygen gas, which is then discharged from the anode electrode 12.

Measurement for creating the first characteristics data is performed after the carbon dioxide electrolysis has been performed and stopped. After stoppage, a voltage value is measured together with a measurement time of day. Thus, the first characteristics data showing voltage-time characteristics after stoppage of the carbon dioxide electrolysis, as shown by the solid line in Fig. 7, can be obtained. Namely, the first characteristics data can be obtained without disassembling the electrochemical cell stack 1.

The second characteristics data may be data showing the voltage-time characteristics of a certain cell 10 in a carbon dioxide electrolysis device comprising the electrochemical cell stack 1, after stoppage of water electrolysis. During the water electrolysis, water as the cathode fluid F1 shown in Fig. 1 is supplied to the cathode electrode 11, and an electrolytic solution (such as calcium hydrogen carbonate) as the anode fluid F2 is supplied to the anode electrode 12. The membrane electrode assembly 10M performs the water electrolysis, so that the cathode electrode 11 produces hydrogen gas, which is then discharged from the cathode electrode 11. The anode electrode 12 produces oxygen gas, which is then discharged from the anode electrode 12.

Measurement for creating the second characteristics data is performed after the water electrolysis has been performed and stopped. The water electrolysis may be performed after the first characteristics data has been created, or before the first characteristics data is created. After stoppage, a voltage value is measured together with a measurement time of day. Thus, the second characteristics data showing voltage-time characteristics after stoppage of the water electrolysis, as shown by the broken lines in Fig. 7, can be obtained. Namely, the second characteristics data can be obtained without disassembling the electrochemical cell stack 1.

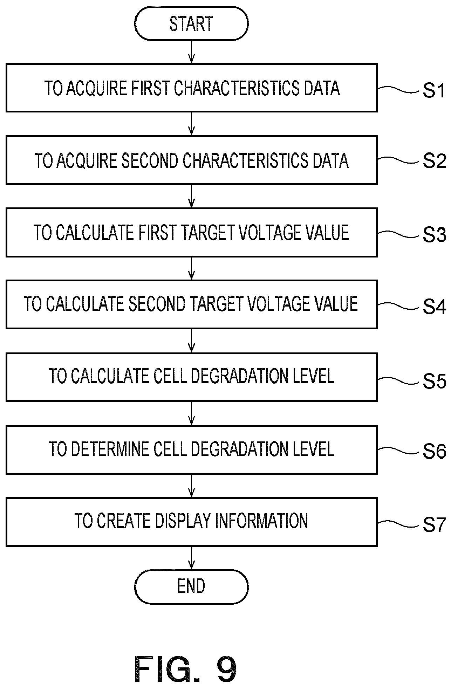

Next, a cell degradation level calculation method for the electrochemical cell stack 1 according to this embodiment is described with reference to Fig. 9.

In step S1, the first acquisition unit 61 first acquires a piece of first characteristics data showing the voltage-time characteristics of the cell 10 after stoppage of the carbon dioxide electrolysis. For example, as shown in Fig. 5, the first acquisition unit 61 acquires a piece of first characteristic data, which corresponds to one given cell 10, out of the plurality of pieces of first characteristics data stored in the first database 41.

In step S2, the second acquisition unit 62 acquires a piece of second characteristics data showing the voltage-time characteristics of the cell 10 after stoppage of the water electrolysis. For example, as shown in Fig. 6, the second acquisition unit 62 acquires a piece of second characteristics data, which corresponds to the cell 10 associated with the identification information common to the piece of first characteristics data, out of the plurality of pieces of second characteristics data stored in the second database 42. In the example shown in Fig. 9, step S2 follows step S1. However, step S2 may be prior to or simultaneous with step S1.

In step S3 following step S2, the first calculation unit 63 calculates a first target voltage value V1 (see Fig. 7) based on the piece of first characteristics data acquired in step S1.

In step S4, the second calculation unit 64 calculates a second target voltage value V2 (see Fig. 7) based on the piece of second characteristics data acquired in step S2. In the step shown in Fig. 9, step S4 follows step S3. However, step S4 may be prior to or simultaneous with step S3.

In step S5 following step S4, the third calculation unit 65 calculates a cell degradation level based on the first target voltage value calculated in step S3 and the second target voltage value calculated in step S4. The third calculation unit 65 may calculate the cell degradation level using the aforementioned formula (1).

In step S6 following step S5, the first determination unit 66 determines whether the cell degradation level calculated in step S5 is equal to or greater than the degradation level threshold value. When the cell degradation level is equal to or greater than the degradation level threshold value, it may be considered that a short circuit has occurred in the corresponding cell 10.

In step S7 following step S6, the first display information creation unit 67 creates display information including the cell degradation level calculated in step S5 and the result determined in step S6. The thus created display information may be displayed on the display unit 52.

When a cell degradation level of a cell 10 other than the aforementioned cell 10 whose cell degradation level has been calculated is calculated, a piece of first characteristics data of the other cell 10 is acquired in step S1, a piece of second characteristics data of the same cell 10 is acquired in step S2, and steps S3 to step S7 are performed. Cell degradation levels of a plurality of cells 10 can be calculated by performing the aforementioned step S1 to step S7 for the respective cells 10.

According to this embodiment, the first target voltage value is calculated based on the first characteristics data showing the voltage-time characteristics of the cell 10 after stoppage of the carbon dioxide electrolysis, and the second target voltage value is calculated based on the second characteristics data showing the voltage-time characteristics of the cell 10 after stoppage of the water electrolysis. Then, the cell degradation level of the cell 10 is calculated based on the first target voltage value and the second target voltage value. Namely, the cell degradation level of the cell 10 can be calculated only by means of the first target voltage value and the second target voltage value. Thus, the cell degradation level can be easily obtained.

In addition, according to this embodiment, the cell degradation level is calculated by dividing a difference, which is obtained by subtracting the second target voltage value from the first target voltage value, by the first target voltage value. Thus, the cell degradation level of the cell 10 can be easily obtained.

In addition, according to this embodiment, whether the cell degradation level is equal to or greater than the degradation level threshold value is determined. Thus, a relatively seriously degraded cell 10 can be selected. When the degradation level threshold value is set as a value at which a short circuit is considered to have occurred, whether a short circuit has occurred in a cell 10 can be determined.

The aforementioned embodiment describes an example in which the electrochemical cell stack 1 has an internal manifold structure. However, the embodiment is not limited to this example. For example, the electrochemical cell stack 1 may have an external manifold structure. In this case, the cell frame 20 is not used, and a manifold forming respective gas flow paths is provided on an outside surface of a layered body in which the membrane electrode assembly 10M and the separator 30 are layered.

In addition, the aforementioned embodiment describes an example in which one separator 30 including the cathode flow path 31 and the anode flow path 32 is interposed between the two cells 10. However, the embodiment is not limited to this example. For example, a cathode-side separator including a cathode flow path and an anode-side separator including an anode flow path may be interposed between the two cells 10. A not-shown cooling water flow path may be formed between the cathode-side separator and the anode-side separator.

(Second Embodiment)

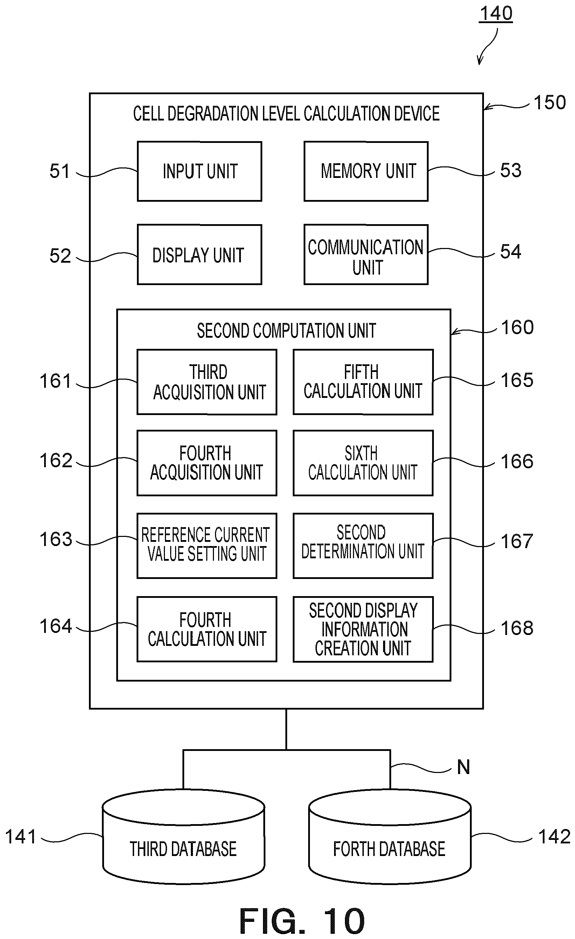

Next, a cell stack level calculation device for electrochemical cell stack according to a second embodiment, a cell degradation level calculation system, a cell degradation level calculation method, and a cell degradation level calculation program are described with reference of Figs. 10 to 15.

The second embodiment shown in Figs. 10 to 15 differs from the first embodiment shown in Figs. 1 to 9 mainly in that the cell degradation level is calculated based on a third target voltage value calculated from voltage-current characteristics of a cell and a fourth target voltage value calculated from voltage-current current characteristics of the cell when it is new, and is substantially the same as the first embodiment in other configurations. In Figs. 10 to 15, the same parts as in the first embodiment shown in Figs. 1 to 9 are indicated by the same symbols and detailed description thereof is omitted.

A cell degradation level calculation system 140 for an electrochemical cell stack 1 according to this embodiment is described. The cell degradation level calculation system 140 is a system for calculating a cell degradation level of a cell 10 of the electrochemical cell stack 1.

As shown in Fig. 10, the cell degradation level calculation system 140 for the electrochemical cell stack 1 according to this embodiment may comprise a third database 141, a fourth database 142, and a cell degradation level calculation device 150 according to this embodiment. The respective databases 141, 142 and the cell degradation level calculation device 150 are connected through a network N such as LAN (Local Area Network). In this embodiment, the third database 141 and the fourth database 142 are connected to the cell degradation level calculation device 150.

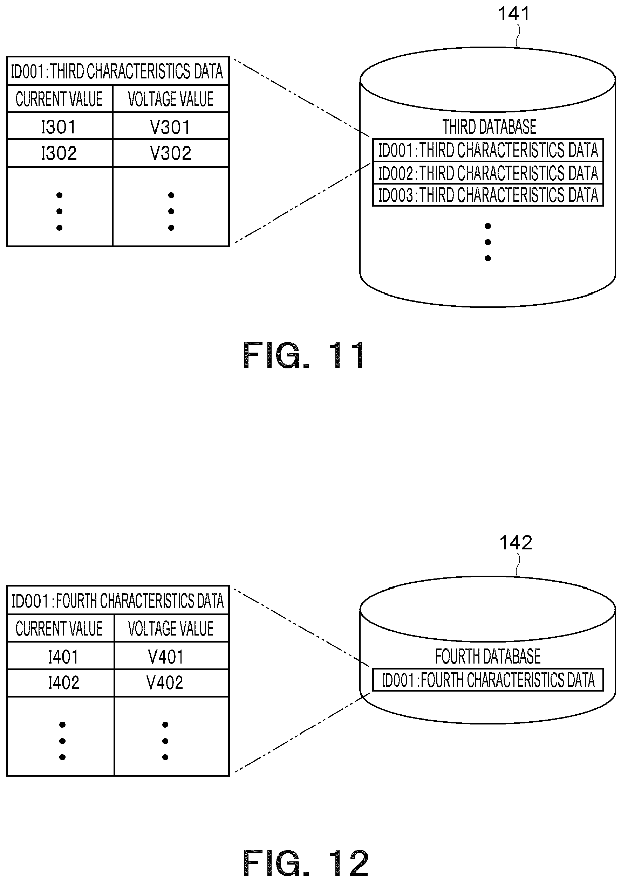

As shown in Fig. 11, the third database 141 stores third characteristics data showing voltage-current characteristics of a certain cell 10. The third database 141 may store a plurality of pieces of third characteristics data for a plurality of cells 10. Identification information is assigned to each piece of third characteristics data, and each piece of third characteristics data is associated with the identification information. Each piece of third characteristics data has a plurality of combinations of current value and voltage value corresponding to each other. Details of the third characteristics data will be described later. As shown in Fig. 11, when the identification information is an ID code, consecutive ID codes may be assigned to the respective cells 10. However, numbering of ID codes to be assigned to the respective cells 10 is optional, as long as it has an identification function. The third database 141 may be recorded on a cloud server. Upon measurement, the third characteristics data may be recorded on the cloud server so as to be stored in the third database 141.

As shown in Fig. 12, the fourth database 142 stores fourth characteristics data showing voltage-current characteristics of the cell 10 when it is new. When the cells 10 whose third characteristic data are stored in the third database 141 have the same structure, one piece of fourth characteristics data may be stored as a common data in the fourth database 142. The fourth characteristics data has a plurality of combinations of current value and voltage value corresponding to each other. Details of the fourth characteristics data will be described later. The fourth database 142 may be recorded on the cloud server. Upon measurement, the fourth characteristics data may be recorded on the cloud server so as to be stored in the fourth database 142.

Next, the cell degradation level calculation device 150 according to this embodiment is described. The cell degradation level calculation device 150 is a device for calculating a cell degradation level of the cell 10 of the electrochemical cell stack 1.

As shown in Fig. 10, the cell degradation level calculation device 150 may include an input unit 51, a display unit 52, a memory unit 53, a communication unit 54, and a second computation unit 160. The input unit 51, the display unit 52, the memory unit 53, and the communication unit 54 may have the same structures as the input unit 51, the display unit 52, the memory unit 53, and the communication unit 54 shown in Fig. 4.

As shown in Fig. 10, the second computation unit 160 may include functional blocks such as a third acquisition unit 161, a fourth acquisition unit 162, a reference setting unit 163, a fourth calculation unit 164, a fifth calculation unit 165, a sixth calculation unit 166, a second determination unit 167, a second display information creation unit 168, etc. These functional blocks may be realized by, for example, executing a computer program stored in the memory unit 53 by the second computation unit 160. This program is an example of a cell degradation level calculation program of the electrochemical cell stack 1, and may be installed in the cell degradation level calculation device 150 from a storage medium. Alternatively, the cell degradation level calculation program may be downloaded to the cell degradation level calculation device 150 from a server or the like on the network N.

The third acquisition unit 161 acquires a piece of third characteristics data showing the voltage-current characteristics of the cells 10. The third characteristics data is acquired, together with identification information associated therewith, from the aforementioned third database 141. The third acquisition unit 161 is configured to acquire the third characteristics data from the third database 141 through the communication unit 54 and the network N.

The fourth acquisition unit 162 acquires a piece of fourth characteristics data showing the voltage-current characteristics of the cell 10 when it is new. The fourth acquisition unit 162 is configured to acquire the fourth characteristics data from the fourth database 142 through the communication unit 54 and the network N.

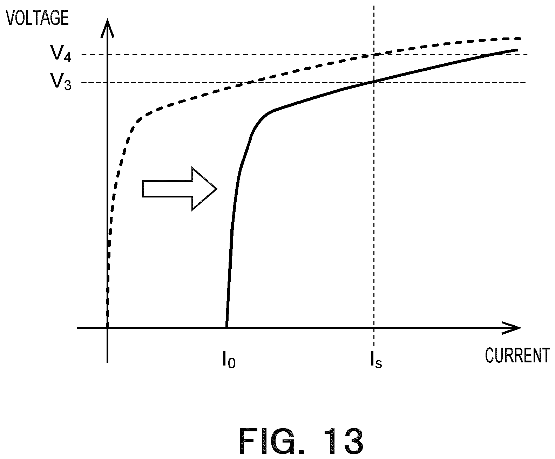

The reference setting unit 163 sets a reference current value. The reference current value is used for calculating a third target voltage value and a fourth target voltage value described later. As shown in Fig. 13, the reference setting unit 163 set, as a reference current value $I_s$, a current value that is greater than a current value (zero-point current value $I_0$) at which a voltage value is zero, from the third characteristics data. The reference setting unit 163 may set, as the reference current value Is, a minimum current value at which a voltage-value change rate with respect to a current value of the third characteristics data ($\Delta V/\Delta I$) is equal to or less than a change rate threshold value. In this case, a current value at which the change in voltage value caused by increase in current value is small may be set as a reference current value. When the aforementioned change rate of the voltage value with respect to the current value becomes small, fluctuation of the change rate is reduced. This can improve accuracy of the third target voltage value and the fourth target voltage value. Thus, the change rate threshold value may be set as a value at which the cell degradation level can be accurately calculated.

The fourth calculation unit 164 calculates the third garget voltage value. As shown in Fig. 13, the third target voltage value $V_3$ shows a voltage value corresponding to the reference current value set by the reference setting unit 163 based on the third characteristics data. A third characteristics curve shown in Fig. 13 may be calculated by the current values and the voltage values constituting the third characteristics data, and a voltage value corresponding to the reference current value in the third characteristics curve may be set as the third target voltage value. An example of the third characteristics curve is shown by a sold line in Fig. 13.

The fifth calculation unit 165 calculates the fourth target voltage value. As shown in Fig. 13, the fourth target voltage value $V_4$ shows a voltage value corresponding to the reference current value Is based on the fourth characteristics data. A process for calculating the fourth target voltage value from the fourth characteristics data may be similar to the aforementioned process for calculating the third target voltage value from the third characteristics data. A fourth characteristics curve shown in Fig. 13 may be calculated by the current values and the voltage values constituting the fourth characteristics data, and a voltage value corresponding to the reference current value in the fourth characteristics curve may be set as the fourth target voltage value. An example of the fourth characteristics curve is shown by broken lines in Fig. 13.

The sixth calculation unit 166 calculates a cell degradation level based on the third target voltage value and the fourth target voltage value. The cell degradation level shows a degradation level of a certain cell 10. For example, the fifth calculation unit 165 may calculate the cell degradation level by dividing a difference, which is obtained by subtracting the third target voltage value from the fourth target voltage value, by the fourth target voltage value. Namely, the cell degradation level $\alpha$ may be calculated according to the following formula (2),

$$\alpha = \frac{(V_4 - V_3)}{V_4} \cdots (2)$$

wherein $V_3$ represents the third target voltage value, and $V_4$ represents the fourth target voltage value.

The second determination unit 167 may determine whether the cell degradation level calculated by the sixth calculation unit 166 is equal to or greater than a degradation level threshold value. In this case, the degradation degree of the cell 10 can be determined. The degradation level threshold value may be a value at which degradation is considered to be relatively serious. When the cell degradation level is relatively serious, the cell degradation level is high. Alternatively, the degradation level threshold value may be a value at which a short circuit is considered to have occurred in the cell 10. When a short circuit has occurred, a difference between the third target voltage value $V_3$ and the fourth target voltage value $V_4$ increases, so that the cell degradation level becomes high.

The second display information creation unit 168 creates display information including the cell degradation level calculated by the sixth calculation unit 166. The display information may include the result of the cell degradation level determined by the second determination unit 167. The display information created by the second display information creation unit 168 may be displayed on the aforementioned display unit 52.

Next, how to create the third characteristics data and the fourth characteristics data is described. Herein, a case in which the electrochemical cell stack 1 shown in Fig. 1 constitutes a carbon dioxide electrolysis device is described by way of example.

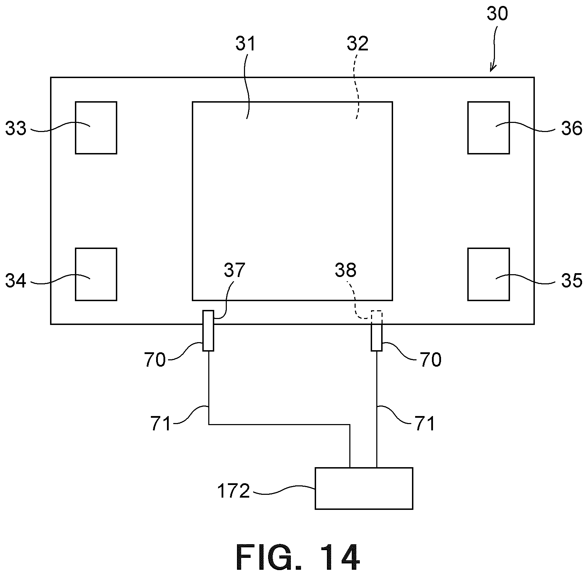

As shown in Fig. 14, a plurality of measurement pins 70 are attached to the electrochemical cell stack 1 to measure a voltage applied to the cell 10 and a current flowing through the cell 10. The measurement pin 70 for the cathode electrode 11 may be inserted in a cathode-side recess 37 formed in a surface of the separator 30, which opposes the cathode 11. The cathode-side recess 37 is formed at a position different from the cathode flow path 31 formed in the surface in Fig. 14. In Fig. 14, the cathode flow path 31 is shown simplified for the sake of convenience. The measurement pin 70 inserted in the cathode-side recess 37 can be electrically in contact with the cathode electrode 11. The measurement pin 70 for the anode electrode 12 may be inserted in an anode-side recess 38 formed in a surface of the separator 30, which opposes the anode 12. The anode-side recess 38 is formed at a position different from the anode flow path 32 formed in the rear surface in Fig. 14. The measurement pin 70 inserted in the anode-side recess 38 can be electrically in contact with the anode electrode 12. Although Fig. 14 shows a measurement state of one cell 10 as a typical example, the measurement pins 70 are inserted in the cathode-side recesses 37 and the anode-side recesses 38 of the respective separators 30 to measure voltage values and current values of the respective cells 10 constituting the electrochemical cell stack 1. Namely, two measurement pins 70 may be used for each cell 10 for measurement.

Each measurement pin 70 for the cathode electrode 11 and each measurement pin 70 for the anode electrode 12 are connected to a measurement device 172 through electric wires 71. The electric wires 71 electrically connect the measurement pins 70 and the measurement device 72. When the electrochemical cell stack 1 has an internal manifold structure, the measurement pins 70 are air-tightly attached to the separator 30 using a seal member, not shown. This prevents leakage of fluids such as the cathode fluid, anode fluid, etc. Each electric wire 71 passes through a housing, not shown, to be connected to the measurement device 172 disposed outside.

The measurement device 172 measures a voltage value and a current value of each cell 10. The measurement device 172 is connected to the aforementioned third database 141 through the network N. The voltage value and the current value measured by the measurement device 172 are associated with the identification information of the corresponding cell 10, and are transmitted to the third database 141. As shown in Fig. 11, the voltage value and the current value are stored as the third characteristics data in the third database 141. A plurality of pieces of third characteristics data corresponding to the respective cells 10 are stored in the third database 141. Each piece of third characteristics data is associated with the identification information of the corresponding cell 10.

The third characteristics data may be a data showing the voltage-current characteristics in a carbon dioxide electrolysis device comprising the electrochemical cell stack 1, which performs, not carbon dioxide electrolysis, but water electrolysis. During the water electrolysis, water as the cathode fluid F1 shown in Fig. 1 is supplied to the cathode electrode 11, and an electrolytic solution (such as calcium hydrogen carbonate) as the anode fluid F2 is supplied to the anode electrode 12. The membrane electrode assembly 10M performs the water electrolysis, so that the cathode electrode 11 produces hydrogen gas, which is then discharged from the cathode electrode 11. The anode electrode 12 produces oxygen gas, which is then discharged from the anode electrode 12.

Measurement for creating the third characteristics data is performed while the water electrolysis is performed. After the water electrolysis reaction has reached a steady state, a voltage value and a current value are measured while one of the voltage value and the current value is changed. The voltage values and the current values measured for the respective cells 10 are stored as a plurality of pieces of third characteristics data in the third database 141. Thus, the third characteristic data showing voltage-current characteristics, as shown by the solid line in Fig. 13 can be obtained. Namely, the third characteristics data can be obtained without disassembling the electrochemical cell stack 1. Identification information is assigned to each piece of third characteristics data stored in the third database 141, and each piece of third characteristics data is associated with the identification information.

The third characteristics data may be obtained by measuring a voltage value and a current value of the cell 10 of the electrochemical cell stack 1 after operation. The measurement pins 70 and the electric wires 71 may be attached to the electrochemical cell stack 1 at the time of measurement, and may be removed therefrom after completion.

The fourth characteristics data may be a data showing voltage-current characteristics obtained when the new electrochemical cell stack 1 performs water electrolysis. Namely, before the electrochemical cell stack 1 is operated, e.g., when it is shipped or delivered, a voltage value and a current value are measured similarly to the aforementioned third characteristics data. As shown in Fig. 12, the voltage values and the current values are stored as the fourth characteristics data in the fourth database 142. Thus, the fourth characteristics data showing voltage-current characteristics, as shown by the broken lines in Fig. 13, can be obtained.

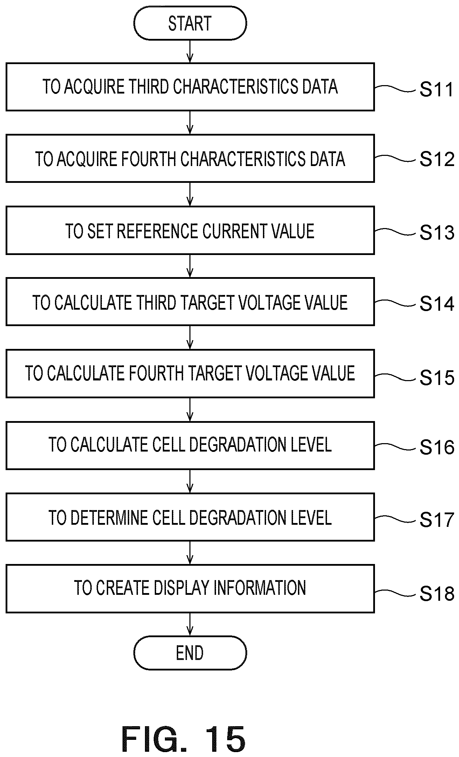

Next, a cell degradation level calculation method for the electrochemical cell stack 1 according to this embodiment is described with reference to Fig. 15.

In step S11, the third acquisition unit 161 first acquires a piece of third characteristics data showing the voltage-current characteristics of the cell 10. For example, as shown in Fig. 11, the third acquisition unit 161 acquires a piece of third characteristics data, which corresponds to one given cell 10, out of a plurality of piece of the third characteristics data stored in the third database 141.

In step S12, the fourth acquisition unit 162 acquires a piece of fourth characteristics data showing the voltage-current characteristics of the cell 10 when it is new. In the example shown in Fig. 15, step S12 follows step S11. However, step S12 may be prior to or simultaneous with step S11.

In step S13 following step S12, the reference setting unit 163 sets a reference current value. The reference current value may be set at a value greater than the zero-point current value $I_0$ shown in Fig. 13, or may be set at a minimum current value at which a change rate of the voltage value with respect to a current value of the third characteristics data is equal to or less than a change rate threshold value.

In step S14 following step S13, the fourth calculation unit 164 calculates the third target voltage value $V_3$ (see Fig. 13) based on the third characteristics data acquired in step S11.

In step S15, the fifth calculation unit 165 calculates the fourth target voltage value $V_4$ (see Fig. 13) based on the fourth characteristics data acquired in step S12. In the example shown in Fig. 15, step S15 follows step S14. However, step S15 may be prior to or simultaneous with step S14.

In step S16 following step S15, the sixth calculation unit 166 calculates the cell degradation level based on the third target voltage value calculated in step S14 and the fourth target voltage value calculated in step S15. The sixth calculation unit 166 may calculate the cell degradation level using the aforementioned formula (2).

In step S17 following step S16, the second determination unit 167 determines whether the cell degradation level calculated in step S16 is equal to or greater than the degradation level threshold value. When the cell degradation level is equal to or greater than the degradation level threshold value, it may be considered that a short circuit has occurred in the corresponding cell 10.

In step S18 following step S17, the second display information creation unit 168 creates display information including the cell degradation level calculated in step S16 and the result determined in step S17. The created display information may be displayed on the display unit 52.

When a cell degradation level of a cell 10 other than the cell 10 whose aforementioned cell degradation level has been calculated is calculated, the third characteristics data of the other cell 10 is acquired in step S11, and steps S12 to S18 are performed. Cell degradation levels of a plurality of cells 10 can be calculated by performing the aforementioned step S11 to step S18 for the respective cells 10.

According to this embodiment, the third target voltage value showing a voltage value corresponding to the reference current value is calculated based on the third characteristics data showing the voltage-current characteristics of the cell 10, and the fourth target voltage value corresponding to the reference current value is calculated based on the fourth characteristics data showing the voltage-current characteristics of the cell 10 when it is new. The cell degradation level of the cell 10 is calculated based on the third target voltage value and the fourth target voltage value. Namely, the cell degradation level of the cell 10 can be calculated only by means of the third target voltage value and the fourth target voltage value. Thus, the cell degradation level can be easily obtained.

In addition, according to this embodiment, the cell degradation level is calculated by dividing a difference, which is obtained by subtracting the third target voltage value from the fourth target voltage value, by the fourth target voltage value. Thus, the cell degradation level of the cell 10 can be easily obtained.

In addition, according to this embodiment, a current value value that is greater than a current value at which a voltage value is zero, is set as the reference current value from the third characteristics data. This allows the reference current value to be appropriately set as a current value at which the third target voltage value can be calculated, thereby improving the accuracy of the calculation of the cell degradation level.

In addition, according to this embodiment, a minimum current value at which a change rate of the voltage value with respect to a current value is equal to or less than a change rate threshold value is set as the reference current value. This allows the reference current value to be more appropriately set, thereby furthermore improving the accuracy of the calculation of the cell degradation level.

In addition, according to this embodiment, whether the cell degradation level is equal to or greater than the degradation level threshold value. Thus, a relatively seriously degraded cell 10 can be selected. When the degradation level threshold value is set as a value at which a short circuit is considered to have occurred, whether a short circuit has occurred in a cell 10 can be determined.

The aforementioned embodiment describes an example in which the electrochemical cell stack 1 has an internal manifold structure. However, the embodiment is not limited to this example. For example, the electrochemical cell stack 1 may have an external manifold structure. In this case, the cell frame 20 is not used, and a manifold forming respective gas flow paths is provided on an outside surface of a layered body in which the membrane electrode assembly 10M and the separator 30 are layered.

In addition, the aforementioned embodiment describes an example in which one separator 30 including the cathode flow path 31 and the anode flow path 32 is interposed between the two cells 10. However, the embodiment is not limited to this example. For example, a cathode-side separator including a cathode flow path and an anode-side separator including an anode flow path may be interposed between the two cells 10. A not-shown cooing water flow path may be formed between the cathode-side separator and the anode-side separator.

The aforementioned embodiments allow the cell degradation level to be easily obtained.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the sprit of the inventions. The accompanying claims and their equivalents are intended to cover such forms or modifications as would fail within the scope and spirit of the invention.

## Claims

**1.** A cell degradation level calculation device for electrochemical cell stack that calculates a degradation level of a cell of an electrochemical cell stack, comprising:

a first acquisition unit that acquires a piece of first characteristics data showing voltage-time characteristics of the cell after stoppage of carbon dioxide electrolysis;
a second acquisition unit that acquires a piece of second characteristics data showing voltage-time characteristics of the cell after stoppage of water electrolysis;
a first calculation unit that calculates a first target voltage value based on the first characteristics data;
a second calculation unit that calculates a second target voltage value based on the second characteristics data; and
a third calculation unit that calculates a cell degradation level showing a degradation level of the cell based on the first target voltage value and the second target voltage value;
wherein:

the voltage-time characteristics after stoppage of the carbon dioxide electrolysis has a first time slot in which a voltage-value decrease rate increases, and a second time slot succeeding the first time slot, in which the voltage-value decrease rate decreases;
the voltage-time characteristics after stoppage of the water electrolysis has a third time slot in which a voltage-value decrease rate increases, and a fourth time slot succeeding the third time slot, in which the voltage-value decrease rate decreases;
the first target voltage value is the voltage value at which the voltage-value decrease rate reaches a first threshold value in the second time slot of the first characteristics data; and
the second target voltage value is the voltage value at which the voltage-value decrease rate reaches a second threshold value in the fourth time slot of the second characteristics data.

2. The cell degradation level calculation device for electrochemical cell stack according to claim 1, wherein the third calculation unit calculates the cell degradation level by dividing a difference, which is obtained by subtracting the second target voltage value from the first target voltage value, by the first target voltage value.

3. The cell degradation level calculation device for electrochemical cell stack according to claim 1 or 2, further comprising a first determination unit that determines whether the cell degradation level calculated by the third calculation unit is equal to or greater than a degradation level threshold value.

4. A cell degradation level calculation system for electrochemical cell stack that calculates a degradation level of a cell of an electrochemical cell stack, comprising:

a cell degradation level calculation device for electrochemical cell stack according to any one of claims 1 to 3;
a first database that stores the first characteristics data; and
a second database that stores the second characteristics data;
wherein:

the first acquisition unit acquires the first characteristics data from the first database; and
the second acquisition unit acquires the second characteristics data from the second database.

5. A cell degradation level calculation method for electrochemical cell stack that calculates a degradation level of a cell of an electrochemical cell stack, comprising:

acquiring a piece of first characteristics data showing voltage-time characteristics of the cell after stoppage of carbon dioxide electrolysis in the electrochemical cell stack;
acquiring a piece of second characteristics data showing voltage-time characteristics of the cell after stoppage of water electrolysis in the electrochemical cell stack;
calculating a first target voltage value based on the first characteristics data;
calculating a second target voltage value based on the second characteristics data; and
calculating a cell degradation level showing a degradation level of the cell based on the first target voltage value and the second target voltage value;
wherein:

the voltage-time characteristics after stoppage of the carbon dioxide electrolysis has a first time slot in which a voltage-value decrease rate increases, and a second time slot succeeding the first time slot, in which the voltage-value decrease rate decreases;
the voltage-time characteristics after stoppage of the water electrolysis has a third time slot in which a voltage-value decrease rate increases, and a fourth time slot succeeding the third time slot, in which the voltage-value decrease rate decreases;
the first target voltage value is the voltage value at which the voltage-value decrease rate reaches a first threshold value in the second time slot of the first characteristics data; and
the second target voltage value is the voltage value at which the voltage-value decrease rate reaches a second threshold value in the fourth time slot of the second characteristics data.

6. A cell degradation level calculation program for electrochemical cell that causes a computer to execute a cell degradation level calculation method for electrochemical cell stack that calculates a degradation level of a cell of an electrochemical cell stack, wherein the cell degradation level calculation method comprising:

acquiring a piece of first characteristics data showing voltage-time characteristics of the cell after stoppage of carbon dioxide electrolysis in the electrochemical cell stack;
acquiring a piece of second characteristics data showing voltage-time characteristics of the cell after stoppage of water electrolysis in the electrochemical cell stack;
calculating a first target voltage value based on the first characteristics data;
calculating a second target voltage value based on the second characteristics data; and
calculating a cell degradation level showing a degradation level of the cell based on the first target voltage value and the second target voltage value;
wherein:

the voltage-time characteristics after stoppage of the carbon dioxide electrolysis has a first time slot in which a voltage-value decrease rate increases, and a second time slot succeeding the first time slot, in which the voltage-value decrease rate decreases;
the voltage-time characteristics after stoppage of the water electrolysis has a third time slot in which a voltage-value decrease rate increases, and a fourth time slot succeeding the third time slot, in which the voltage-value decrease rate decreases;
the first target voltage value is the voltage value at which the voltage-value decrease rate reaches a first threshold value in the second time slot of the first characteristics data; and
the second target voltage value is the voltage value at which the voltage-value decrease rate reaches a second threshold value in the fourth time slot of the second characteristics data.

**7.** A cell degradation level calculation device for electrochemical cell stack that calculates a degradation level of a cell of an electrochemical cell stack, comprising:

a third acquisition unit that acquires a piece of third characteristics data showing voltage-current characteristics of the cell;
a fourth acquisition unit that acquires a piece of fourth characteristics data showing voltage-current characteristics of the cell when it is new;
a fourth calculation unit that calculates a third target voltage value showing a voltage value corresponding to a reference current value based on the third characteristics data;
a fifth calculation unit that calculates a fourth target voltage value showing a voltage value corresponding to the reference current value based on the fourth characteristics data; and
a sixth calculation unit that calculates a cell degradation level showing a degradation level of the cell based on the third target voltage value and the fourth target voltage value.

**8.** The cell degradation level calculation device for electrochemical cell stack according to claim 7, wherein the sixth calculation unit calculates the cell degradation level by dividing a difference, which is obtained by subtracting the third target voltage value from the fourth target voltage value, by the fourth target voltage value.

**9.** The cell degradation level calculation device for electrochemical cell stack according to claim 7 or 8, further comprising a reference setting unit that sets the reference current value, wherein
the reference setting unit sets, as the reference current value, a current value that is greater than a current value at which a voltage value is zero, from the third characteristics data.

**10.** The cell degradation level calculation device for electrochemical cell stack according to claim 9, wherein the reference setting unit sets, as the reference current value, a minimum current value at which a voltage-value change rate with respect to a current value is equal to or less than a change rate threshold value.

**11.** The cell degradation level calculation device for electrochemical cell stack according to any one of claims 7 to 10, further comprising a second determination unit that determines whether the cell degradation level calculated by the sixth calculation unit is equal to or greater than a degradation level threshold value.

**12.** A cell degradation level calculation system for electrochemical cell stack that calculates a degradation level of a cell of an electrochemical cell stack, comprising:

a cell degradation level calculation device for electrochemical cell according to any one of claims 7 to 11;
a third database that stores the third characteristics data; and
a fourth database that stores the fourth characteristics data;
wherein:

the third acquisition unit acquires the third characteristics data from the third database; and
the fourth acquisition unit acquires the fourth characteristics data from the fourth database.

**13.** A cell degradation level calculation method for electrochemical cell stack that calculates a degradation level of a cell of an electrochemical cell stack, comprising:

acquiring a piece of third characteristics data showing voltage-time characteristics of the cell;
acquiring a piece of fourth characteristics data showing voltage-time characteristics of the cell when it is new;
calculating a third target voltage value showing a voltage value corresponding to a reference current value based on the third characteristics data;
calculating a fourth target voltage value showing a voltage value corresponding to the reference current value based on the fourth characteristics data; and
calculating a cell degradation level showing a degradation level of the cell based on the third target voltage value and the fourth target voltage value.

**14.** A cell degradation level calculation program for electrochemical cell that causes a computer to execute a cell degradation level calculation method for electrochemical cell stack that calculates a degradation level of a cell of an electrochemical cell stack, wherein the cell degradation level calculation method comprises:

acquiring a piece of third characteristics data showing voltage-time characteristics of the cell;
acquiring a piece of fourth characteristics data showing voltage-time characteristics of the cell when it is new;
calculating a third target voltage value showing a voltage value corresponding to a reference current value based on the third characteristics data;
calculating a fourth target voltage value showing a voltage value corresponding to the reference current value based on the fourth characteristics data; and
calculating a cell degradation level showing a degradation level of the cell based on the third target voltage value and the fourth target voltage value.

F1
F2
1
11b
11a
31
32
11
30
11
10,10M
13
32
13
10,10M
12
12
30
31
30
2
2
4
4
3
3
12a
F1
12b
F2
D

FIG. 1

10
20
20a
11
10a
21
24
14
22
23

FIG. 2

103
100
102
POWER CONVERTER
1
ELECTROCHEMICAL CELL STACK
CONTROLLER
103
101
AUXILIARY MACHINE

FIG. 3

40
CELL DEGRADATION LEVEL CALCULATION DEVICE
50
51
INPUT UNIT
MEMORY UNIT
53
52
DISPLAY UNIT
COMMUNICATION UNIT
54
FIRST COMPUTATION UNIT
60
61
FIRST ACQUISITION UNIT
THIRD CALCULATION UNIT
65
62
SECOND ACQUISITION UNIT
FIRST DETERMINATION UNIT
66
63
FIRST CALCULATION UNIT
FIRST DISPLAY INFORMATION CREATION UNIT
67
64
SECOND CALCULATION UNIT
N
41
FIRST DATABASE
SECOND DATABASE
42

FIG. 4

41
ID001 : FIRST CHARACTERISTICS DATA
TIME
VOLTAGE VALUE
t101
V101
t102
V102
FIRST DATABASE
ID001 : FIRST CHARACTERISTICS DATA
ID002 : FIRST CHARACTERISTICS DATA
ID003 : FIRST CHARACTERISTICS DATA

FIG. 5

42
ID001 : SECOND CHARACTERISTICS DATA
TIME
VOLTAGE VALUE
t201
V201
t202
V202
SECOND DATABASE
ID001 : SECOND CHARACTERISTICS DATA
ID002 : SECOND CHARACTERISTICS DATA
ID003 : SECOND CHARACTERISTICS DATA

FIG. 6

DURING
ELECTROLYSIS
STOPPAGE OF ELECTROLYSIS
VOLTAGE
$T_1$
$T_2$
$T_3$
$T_4$
$V_1$
$V_2$
$t_0$
TIME

FIG. 7

30
31
32
33
36
34
37
38
35
70
70
71
71
72

FIG. 8

START
TO ACQUIRE FIRST CHARACTERISTICS DATA
S1
TO ACQUIRE SECOND CHARACTERISTICS DATA
S2
TO CALCULATE FIRST TARGET VOLTAGE VALUE
S3
TO CALCULATE SECOND TARGET VOLTAGE VALUE
S4
TO CALCULATE CELL DEGRADATION LEVEL
S5
TO DETERMINE CELL DEGRADATION LEVEL
S6
TO CREATE DISPLAY INFORMATION
S7
END

FIG. 9

140
CELL DEGRADATION LEVEL CALCULATION DEVICE
150
51
INPUT UNIT
MEMORY UNIT
53
52
DISPLAY UNIT
COMMUNICATION UNIT
54
SECOND COMPUTATION UNIT
160
161
THIRD ACQUISITION UNIT
FIFTH CALCULATION UNIT
165
162
FOURTH ACQUISITION UNIT
SIXTH CALCULATION UNIT
166
163
REFERENCE CURRENT VALUE SETTING UNIT
SECOND DETERMINATION UNIT
167
164
FOURTH CALCULATION UNIT
SECOND DISPLAY INFORMATION CREATION UNIT
168
N
141
THIRD DATABASE
FORTH DATABASE
142


FIG. 10

141
ID001 : THIRD CHARACTERISTICS DATA
CURRENT VALUE
VOLTAGE VALUE
I301
V301
I302
V302
THIRD DATABASE
ID001 : THIRD CHARACTERISTICS DATA
ID002 : THIRD CHARACTERISTICS DATA
ID003 : THIRD CHARACTERISTICS DATA

FIG. 11

142
ID001 : FOURTH CHARACTERISTICS DATA
CURRENT VALUE
VOLTAGE VALUE
I401
V401
I402
V402
FOURTH DATABASE
ID001 : FOURTH CHARACTERISTICS DATA

FIG. 12

VOLTAGE
V4
V3
I0
Is
CURRENT

FIG. 13

30
31
32
33
36
34
35
37
38
70
70
71
71
172

FIG. 14

START
TO ACQUIRE THIRD CHARACTERISTICS DATA
S11
TO ACQUIRE FOURTH CHARACTERISTICS DATA
S12
TO SET REFERENCE CURRENT VALUE
S13
TO CALCULATE THIRD TARGET VOLTAGE VALUE
S14
TO CALCULATE FOURTH TARGET VOLTAGE VALUE
S15
TO CALCULATE CELL DEGRADATION LEVEL
S16
TO DETERMINE CELL DEGRADATION LEVEL
S17
TO CREATE DISPLAY INFORMATION
S18
END

FIG. 15